# EUROPEAN PATENT APPLICATION

(11) **EP 4 420 946 A1**
(43) Date of publication of application: **28.08.2024**
(21) Application number: 22883209.3
(22) Date of filing: 29.08.2022
(51) Int. Cl.: B60W 20/50, B60L 3/00, B60L 50/16, B60L 50/60, B60L 58/10, B60W 10/26, H01M 10/44, H01M 10/46, H02J 7/00

(54) **HYBRID SYSTEM**

(30) Priority: 20.10.2021 JP 2021171889
(71) Applicant: Kubota Corporation, Osaka 556-8601 (JP)
(72) Inventor: FUJII, Yasuo, Sakai-shi, Osaka 592-8331 (JP); KOYAMA, Kazuaki, Sakai-shi, Osaka 592-8331 (JP); KIMURA, Ryota, Sakai-shi, Osaka 592-8331 (JP)
(74) Representative: Mewburn Ellis LLP
(86) International application number: PCT/JP2022/032401
(87) International publication number: WO 2023/067897

(57) **Abstract**

To provide a hybrid system capable of improving safety regarding a secondary battery that supplies power to a motor generator. A hybrid system 10 includes a motor generator 2, a secondary battery 50 that is provided as a drive power source for the motor generator 2 and supplies power to the motor generator 2, a positive electrode-side contactor 75 that opens and closes an electric circuit 174 between a positive electrode 51 of the secondary battery 50 and the motor generator 2, a negative electrode-side contactor 76 that opens and closes an electric circuit 175 between a negative electrode 52 of the secondary battery 50 and the motor generator 2, a first control unit 150 that controls one of the positive electrode-side contactor 75 and the negative electrode-side contactor 76, and a second control unit 85 that controls the other of the positive electrode-side contactor 75 and the negative electrode-side contactor 76, based on a control signal transmitted from the first control unit 150.

## Description

### [Technical Field]

The present invention relates to a hybrid system that uses an engine, a motor generator, and a battery in combination.

### [Background Art]

A hybrid system that use a combination of an engine, a motor generator, and a battery is being developed for industrial machines, automobiles, and the like in response to a demand for lower pollution and conservation of fossil fuel resources. A hybrid system includes, for example, an internal combustion engine that uses fossil fuel to generate power, a motor generator that assists the internal combustion engine, and a secondary battery such as a lithium-ion battery that supplies power to the motor generator.

In a hybrid system, for example, a battery pack including a lithium-ion battery is used as a power source to drive a motor generator. Charging and discharging speed of a lithium-ion battery is faster than that of other types of secondary batteries. Further, by using a lithium-ion battery as a drive power source for the motor generator, it is possible to downsize the hybrid system. Although the lithium-ion battery has these advantages, the lithium-ion battery also has a disadvantage that it is relatively difficult to handle. Improper handling of the lithium-ion battery may cause smoke or fire. Therefore, when an abnormality occurs in the lithium-ion battery, in addition to stopping supply of power from the lithium-ion battery to the motor generator by using software, it is also necessary to shut off an electrical circuit that supplies power from the lithium-ion battery to the motor generator. It is desirable to shut off the electric circuit even when a secondary battery other than a lithium-ion battery is used as the drive power source for the motor generator. Therefore, the battery pack has a contactor that opens and closes an electric circuit that supplies power from the secondary battery to the motor generator.

PTL 1 discloses a control device for a hybrid vehicle that includes a contactor. In the control device for the hybrid vehicle described in PTL 1, signals for opening and closing the contactor include a contactor control signal output from a hybrid ECU and a contactor control signal output from a transmission ECU. As described above, in the control device for the hybrid vehicle described in PTL 1, two ECUs provided in the hybrid vehicle control opening and closing of one contactor. However, when an abnormality occurs in one contactor, there is a problem in that an electric circuit that supplies power from a battery to a motor cannot be shut off.
In a hybrid system, it is desired to improve safety of a secondary battery that supplies power to a motor generator.

### [Citation List]

### [Patent Literature]

[PTL 1] Japanese Patent Application Publication No. 2000-156910

### [Summary of Invention]

### [Technical Problem]

The present invention has been made in view of the above-described circumstances, and an object of the present invention is to provide a hybrid system that can improve safety of a secondary battery that supplies power to a motor generator.

### [Solution to Problem]

The problem described above is solved by a hybrid system according to the present invention, which is characterized by including a motor generator, a secondary battery that is provided as a drive power source for the motor generator and supplies power to the motor generator, a positive electrode-side contactor that opens and closes an electric circuit between a positive electrode of the secondary battery and the motor generator, a negative electrode-side contactor that opens and closes an electric circuit between a negative electrode of the secondary battery and the motor generator, a first control unit that controls one of the positive electrode-side contactor and the negative electrode-side contactor, and a second control unit that controls the other of the positive electrode-side contactor and the negative electrode-side contactor, based on a control signal transmitted from the first control unit.

According to the hybrid system of the present invention, the first control unit controls one of the positive electrode-side contactor, which opens and closes the electric circuit between the positive electrode of the secondary battery and the motor generator, and the negative electrode-side contactor, which opens and closes the electric circuit between the negative electrode of the secondary battery and the motor generator. The second control unit controls the other of the positive electrode-side contactor and the negative electrode-side contactor, based on the control signal transmitted from the first control unit. In this way, in the hybrid system according to the present invention, two contactors are installed in the electric circuit that supplies power from the secondary battery to the motor generator, and the first control unit controls one of the two contactors, and the second control unit controls the other of the two contactors. Therefore, when an abnormality occurs in the secondary battery or even when the abnormality occurs in either the first control unit or the second control unit, the hybrid system according to the present invention can shut off the electric circuit that supplies power from the secondary battery to the motor generator. Thereby, the hybrid system according to the present invention can improve safety regarding the secondary battery that supplies power to the motor generator.

In the hybrid system according to the present invention, it is preferably characterized in that the first control unit and the second control unit communicate with each other, the second control unit monitors a state of the secondary battery, and when the second control unit detects an abnormality in the secondary battery, the first control unit executes control to open the one of the contactors, and the second control unit executes control to open the other of the contactors independently without depending on the control signal.

According to the hybrid system of the present invention, the first control unit and the second control unit communicate with each other. The second control unit monitors the state of the secondary battery and can detect an abnormality in the secondary battery. When the second control unit detects an abnormality in the secondary battery, the first control unit executes control to open one of the contactors. Therefore, the first control unit can open one of the contactors more reliably than the other of the contactors when an abnormality occurs in the secondary battery, so the electric circuit that supplies power from the secondary battery to the motor generator can be shut off more reliably. Further, when the second control unit detects an abnormality in the secondary battery, the second control unit independently executes control to open the other of the contactors, regardless of the control signal transmitted from the first control unit. Therefore, the second control unit can open the other of the contactors more reliably without depending on the first control unit when an abnormality occurs in the secondary battery, so the electric circuit that supplies power from the secondary battery to the motor generator can be shut off more reliably. Thereby, the hybrid system according to the present invention can further improve the safety regarding the secondary battery that supplies power to the motor generator.

In the hybrid system according to the present invention, it is preferably characterized in that the first control unit and the second control unit communicate with each other and monitor mutual states thereof, when the first control unit detects an abnormality in the second control unit, the first control unit executes control to open the one of the contactors, and when the second control unit detects an abnormality in the first control unit, the second control unit independently executes control to open the other of the contactors without depending on the control signal.

According to the hybrid system of the present invention, the first control unit and the second control unit communicate with each other and monitor mutual states thereof. Either one of the first control unit and the second control unit can detect an abnormality in the other one of the first control unit and the second control unit. When the first control unit detects an abnormality in the second control unit, the first control unit executes control to open one of the contactors. Therefore, the first control unit can more reliably open one of the contactors even when an abnormality occurs in the second control unit, so the electric circuit that supplies power from the secondary battery to the motor generator can be shut off more reliably. Further, when the second control unit detects an abnormality in the first control unit, the second control unit independently executes control to open the other of the contactors without depending on the control signal transmitted from the first control. Therefore, even when an abnormality occurs in the first control unit, the second control unit can open the other of the contactors more reliably without depending on the first control, so the electric circuit that supplies power from the secondary battery to the motor generator can be shut off more reliably. Thereby, the hybrid system according to the present invention can further improve the safety regarding the secondary battery that supplies power to the motor generator.

In the hybrid system according to the present invention, it is preferably characterized in that the one of the contactors is the positive electrode-side contactor, and the other of the contactors is the negative electrode-side contactor.

According to the hybrid system of the present invention, the first control unit controls the positive electrode-side contactor. The second control unit controls the negative electrode-side contactor based on the control signal transmitted from the first control unit. Therefore, when an abnormality occurs in the secondary battery, the second control unit can open the negative electrode-side contactor and shut off the electric circuit between the negative electrode of the secondary battery and the motor generator. Alternatively, when an abnormality occurs in the secondary battery, the second control unit can independently open the negative electrode-side contactor without depending on the control signal transmitted from the first control unit, and can shut off the electric circuit between the negative electrode of the secondary battery and the motor generator. Since the second control unit can shut off the electric circuit connected to the negative electrode of the secondary battery at an earlier stage, it is possible to more reliably prevent problems such as short circuits from occurring in the electric circuit. Thereby, the hybrid system according to the present invention can further improve the safety regarding the secondary battery that supplies power to the motor generator.

In the hybrid system according to the present invention, it is preferably characterized in that the first control unit is an engine control unit that controls an engine, and the second control unit is a battery management unit that is built into a battery pack and controls an operation of the battery pack.

According to the hybrid system of the present invention, the engine control unit that controls the engine controls one of the positive electrode-side contactor and the negative electrode-side contactor. Further, a battery management unit built into the battery pack controls the other of the positive electrode-side contactor and the negative electrode-side contactor, based on the control signal transmitted from the engine control unit. In this way, even when an industrial machine such as an agricultural machine or a construction machine equipped with a hybrid system does not have a control unit, the hybrid system according to the present invention can shut off the electric circuit that supplies power from the secondary battery to the motor generator using a control unit in the hybrid system itself. Thereby, the hybrid system according to the present invention can independently improve the safety regarding the secondary battery that supplies power to the motor generator without depending on the industrial machine or the like on which the hybrid system is mounted.

In the hybrid system according to the present invention, it is preferably characterized in that the secondary battery is a lithium-ion battery.

According to the hybrid system of the present invention, even when a lithium-ion battery, which is relatively difficult to handle among secondary batteries, is provided as a drive power source for the motor generator, the hybrid system according to the present invention can improve the safety regarding the secondary battery that supplies power to the motor generator.

### [Advantageous Effects of Invention]

According to the present invention, it is possible to provide a hybrid system that can improve safety regarding a secondary battery that supplies power to a motor generator.

### [Brief Description of Drawings]

[Fig. 1]

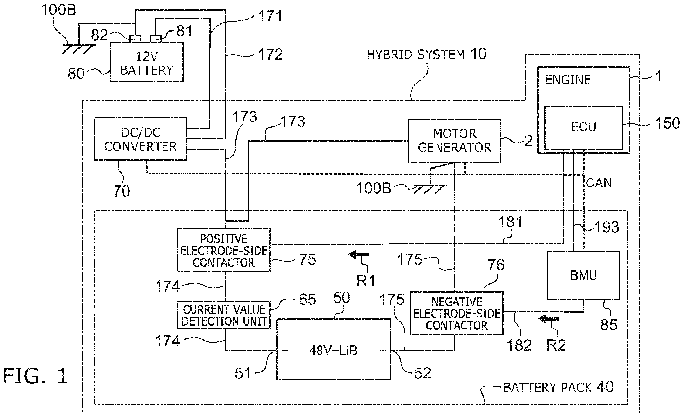

   Fig. 1 is a block diagram illustrating a hybrid system according to an embodiment of the present invention.
[Fig. 2]

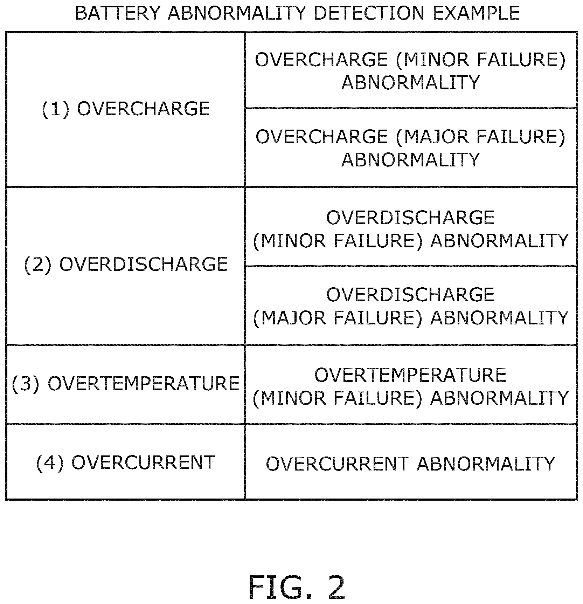

   Fig. 2 is a table illustrating an example of battery abnormality detection information.

### [Description of Embodiments]

Below, a preferred embodiment of the present invention will be described in detail with reference to the drawings. The embodiment described below is a preferred specific example of the present invention, and is therefore subject to various technically preferable limitations. However, the scope of the present invention is not limited to these aspects unless specifically stated in the following description to the effect that the present invention is limited. Further, in each drawing, similar components are denoted by the same reference numerals, and detailed description thereof will be omitted as appropriate.

Fig. 1 is a block diagram illustrating a hybrid system according to an embodiment of the present invention.
Fig. 2 is a table illustrating an example of battery abnormality detection information.
A hybrid system 10 according to this embodiment includes an engine 1, a motor generator 2, and a battery pack 40. The hybrid system 10 according to this embodiment further includes a DC/DC converter 70.

The engine 1 is a multi-cylinder diesel engine such as a supercharged high-output three-cylinder engine or four-cylinder engine with turbocharge. However, the engine 1 is not limited to a diesel engine. The engine 1 includes an engine control unit (ECU) 150. The ECU 150 of this embodiment is an example of a "first control unit" of the present invention. The ECU 150 controls an operation of the engine 1, and also controls the motor generator 2 and the DC/DC converter 70 by communicating with the motor generator 2 and the DC/DC converter 70, for example, by controller area network (CAN).

The motor generator 2 operates with electric power supplied from the battery pack 40 to support the engine 1 when power is required, such as when starting or accelerating an industrial machine or the like on which the hybrid system 10 is mounted. The hybrid system 10 is mounted on, for example, industrial machines including construction machines such as forklifts and agricultural machines such as tractors. Further, the motor generator 2 converts kinetic energy of an industrial machine or the like on which the hybrid system 10 is mounted into electrical energy, using regenerative braking or the like, to generate electricity.

The battery pack 40 includes a battery 50, a positive electrode-side contactor 75, a negative electrode-side contactor 76, a current value detection unit 65, and a battery management unit (BMU) 85. The battery 50 is an example of a "secondary battery" of the present invention. The battery 50 is provided as a drive power source for the motor generator 2 and supplies electric power to the motor generator 2. As in the hybrid system 10 illustrated in Fig. 1, the battery 50 may be, for example, a 48 V high-voltage lithium-ion battery (LiB). However, the battery 50 of this embodiment is not limited to a lithium-ion battery. The battery 50 has a positive (+) terminal 51 and a negative (-) terminal 52.

The positive electrode-side contactor 75 is provided in an electric circuit between the positive electrode terminal 51 of the battery 50 and the motor generator 2. Specifically, as illustrated in Fig. 1, the positive electrode-side contactor 75 is provided on positive electrode wirings 173 and 174 that connect the positive electrode terminal 51 of the battery 50 and the motor generator 2. That is, the electric circuit between the positive electrode terminal 51 of the battery 50 and the motor generator 2 includes the positive electrode wiring 173 and the positive electrode wiring 174. The positive electrode-side contactor 75 is electrically connected to the ECU 150 by a signal line 181, and opens and closes the positive electrode wirings 173 and 174 based on a control signal transmitted from the ECU 150 through the signal line 181.

The positive electrode-side contactor 75 may be electrically connected to the BMU 85. In this case, the positive electrode-side contactor 75 opens and closes the positive electrode wirings 173 and 174 based on a control signal transmitted from the BMU 85. In the description of this embodiment, a case will be exemplified in which the positive electrode-side contactor 75 is electrically connected to the ECU 150 via the signal line 181.

The negative electrode-side contactor 76 is provided in an electric circuit between the negative electrode terminal 52 of the battery 50 and the motor generator 2. Specifically, as illustrated in Fig. 1, the negative electrode-side contactor 76 is provided on a negative electrode wiring 175 that connects the negative electrode terminal 52 of the battery 50 and the motor generator 2. That is, an electric circuit between the negative electrode terminal 52 of the battery 50 and the motor generator 2 includes the negative electrode wiring 175. The negative electrode-side contactor 76 is electrically connected to the BMU 85 through a signal line 182 and opens and closes the negative electrode wiring 175 based on a control signal transmitted from the BMU 85 through the signal line 182.

The negative electrode-side contactor 76 may be electrically connected to the ECU 150. In this case, the negative electrode-side contactor 76 opens and closes the negative electrode wiring 175 based on a control signal transmitted from the ECU 150. In the description of this embodiment, a case will be exemplified in which the negative electrode-side contactor 76 is electrically connected to the BMU 85 via the signal line 182.

The BMU 85 of this embodiment is an example of a "second control unit" of the present invention. The BMU 85 is electrically connected to the ECU 150 via the signal line 193 and controls the negative electrode-side contactor 76 based on a control signal transmitted from the ECU 150 via the signal line 193. The ECU 150 and the BMU 85 communicate with each other and monitor each other's states via CAN, for example.

Further, the BMU 85 monitors a state of the battery 50 and can detect an abnormality in the battery 50. For example, as in an abnormality detection example illustrated in Fig. 2, the BMU 85 detects an overcharge (minor failure) abnormality or an overcharge (major failure) abnormality based on a cell voltage acquired from a cell management unit (CMU) (not illustrated). Alternatively, the BMU 85 detects an overdischarge (minor failure) abnormality or an overdischarge (major failure) abnormality based on the cell voltage acquired from the CMU. Alternatively, the BMU 85 detects an overtemperature (minor failure) abnormality based on a cell temperature acquired from the CMU. Alternatively, the BMU 85 detects an overcurrent abnormality based on a current value acquired from the current value detection unit 65 provided in the positive electrode wiring 174.

As described above, the negative electrode wiring 175 electrically connects the negative electrode terminal 52 of the battery 50 and the motor generator 2, and serves as a ground 100B. For example, the negative electrode wiring 175 is connected to a body of an industrial machine or the like on which the hybrid system 10 is mounted and is grounded. The positive electrode wiring 173 electrically connects the positive electrode terminal 51 of the battery 50 and the motor generator 2, and also electrically connects the motor generator 2 and the DC/DC converter 70. When the battery 50 is a 48 V lithium-ion battery like the hybrid system 10 illustrated in Fig. 1, a potential of the positive electrode wirings 173 and 174 with respect to the negative electrode wiring 175 is 48 V.

The DC/DC converter 70 is electrically connected to a battery 80 via a positive electrode wiring 171 and a negative electrode wiring 172. Examples of the battery 80 include a 12 V lead-acid battery. The negative electrode wiring 172 electrically connects a negative electrode terminal 82 of the battery 80 and the DC/DC converter 70, and serves as the ground 100B. For example, the negative electrode wiring 172 is connected to the body of an industrial machine or the like on which the hybrid system 10 is mounted and is grounded. The positive electrode wiring 171 electrically connects a positive electrode terminal 81 of the battery 80 and the DC/DC converter 70. When the battery 80 is a 12 V lead-acid battery like the hybrid system 10 illustrated in Fig. 1, a potential of the positive electrode wiring 171 with respect to the negative electrode wiring 172 is 12 V.

As described above, the motor generator 2 converts kinetic energy of the industrial machine or the like on which the hybrid system 10 is mounted into electrical energy, using regenerative braking or the like, to generate electricity. The motor generator 2 supplies a voltage to the battery 50 to charge the battery 50, and also supplies a voltage to the battery 80 to charge the battery 80. Here, taking the hybrid system 10 illustrated in Fig. 1 as an example, a potential of the positive electrode wiring 173 with respect to the negative electrode wiring 175 is 48 V. That is, the generated voltage of the motor generator 2 is 48 V. On the other hand, a potential of the positive electrode wiring 171 with respect to the negative electrode wiring 172 is 12 V. Therefore, the DC/DC converter 70 converts the 48 V voltage generated by the motor generator 2 into a 12 V voltage. Thereby, the motor generator 2 can supply a voltage of 12 V to the battery 80 via the DC/DC converter 70 and charge the battery 80.

Also, the DC/DC converter 70 is electrically connected to the battery 50 and the battery 80, and can perform charging and discharging between the battery 50 and the battery 80 based on a control signal transmitted from the ECU 150. For example, the DC/DC converter 70 can discharge the battery 50 and charge the battery 80 by converting the voltage and flowing a constant current (for example, 10 A) from the battery 50 toward the battery 80. Alternatively, for example, the DC/DC converter 70 can discharge the battery 80 and charge the battery 50 by converting the voltage and flowing a constant current (for example, 10 A) from the battery 80 toward the battery 50.

The hybrid system 10 according to this embodiment has a function that can safely shut off the electric circuit that supplies power from the battery 50 to the motor generator 2 when an abnormality occurs in the battery 50 or when the entirety of the hybrid system 10 is shut down. The details of this function will be described below.

For example, when an ignition switch is turned on, the ECU 150 electrically connects the positive electrode wiring 174 by transmitting a control signal to the positive electrode-side contactor 75 through the signal line 181 and executing control to close the positive electrode-side contactor 75. Further, the BMU 85 electrically connects the negative electrode wiring 175 by executing control to close the negative electrode-side contactor 76 based on a control signal transmitted from the ECU 150 through the signal line 193. Thereby, the battery 50 can supply power to the motor generator 2. On the other hand, for example, when the ignition switch is turned off, the ECU 150 electrically shuts off the positive electrode wiring 174 by transmitting a control signal to the positive electrode-side contactor 75 through the signal line 181 and executing control to open the positive electrode-side contactor 75. Further, the BMU 85 electrically shuts off the negative electrode wiring 175 by executing control to open the negative electrode-side contactor 76 based on a control signal transmitted from the ECU 150 through the signal line 193. Thereby, the supply of power from the battery 50 to the motor generator 2 is stopped.

On the other hand, when the BMU 85 detects an abnormality in the battery 50 described above with reference to Fig. 2, for example, the ECU 150 electrically shuts off the positive electrode wiring 174 by transmitting a first shutoff signal R1 to the positive electrode-side contactor 75 via the signal line 181 and executing control to open the positive electrode-side contactor 75. Also, the BMU 85 electrically shuts off the negative electrode wiring 175 by independently transmitting a second shutoff signal R2 to the negative electrode-side contactor 76 via the signal line 182 and executing control to open the negative electrode-side contactor 76, without depending on the control signal transmitted from the ECU 150.

Alternatively, as described above, the ECU 150 and the BMU 85 communicate with each other and monitor each other's states. Therefore, when the ECU 150 detects an abnormality in the BMU 85, the ECU 150 electrically shuts off the positive electrode wiring 174 by transmitting the first shutoff signal R1 to the positive electrode-side contactor 75 via the signal line 181 and executing control to open the positive electrode-side contactor 75. On the other hand, when the BMU 85 detects an abnormality in the ECU 150, the BMU 85 electrically shuts off the negative electrode wiring 175 by independently transmitting the second shutoff signal R2 to the negative electrode-side contactor 76 via the signal line 182 and executing control to open the negative electrode-side contactor 76, without depending on the control signal transmitted from the ECU 150.

According to the hybrid system 10 of this embodiment, two contactors (in this embodiment, the positive electrode-side contactor 75 and the negative electrode-side contactor 76) are provided in the electric circuit (in this embodiment, the positive electrode wirings 173 and 174 and the negative electrode wiring 175) that supplies power from the battery 50 to the motor generator 2, and the ECU 150 controls the positive electrode-side contactor 75 and the BMU 85 controls the negative electrode-side contactor 76. Therefore, when an abnormality occurs in the battery 50 or even when in either the ECU 150 or the BMU 85, the hybrid system 10 according to this embodiment can shut off the electric circuit that supplies power from the battery 50 to the motor generator 2. Thereby, the hybrid system 10 according to this embodiment can improve the safety regarding the battery 50 that supplies power to the motor generator 2.

Also, as described above, when the BMU 85 detects, for example, the abnormality of the battery 50 described above with reference to Fig. 2, the ECU 150 transmits the first shutoff signal R1 to the positive electrode-side contactor 75 via the signal line 181 and executes control to open the positive electrode-side contactor 75. Therefore, the ECU 150 can more reliably open the positive electrode-side contactor 75 when an abnormality occurs in the battery 50, and can more reliably shut off the electric circuit that supplies power from the battery 50 to the motor generator 2. Further, when the BMU 85 detects an abnormality in the battery 50 described above with reference to Fig. 2, for example, the BMU 85 independently transmits the second shutoff signal R2 to the negative electrode-side contactor 76 via the signal line 182 and executes control to open the negative electrode-side contactor 76, without depending on the control signal transmitted from the ECU 150. Therefore, the BMU 85 can more reliably open the negative electrode-side contactor 76 without depending on the ECU 150 when an abnormality occurs in the battery 50, and can more reliably shut off the electric circuit that supplies power from the battery 50 to the motor generator 2. Thereby, the hybrid system 10 according to this embodiment can further improve the safety regarding the battery 50 that supplies power to the motor generator 2.

Further, as described above, when the ECU 150 detects an abnormality in the BMU 85, the ECU 150 transmits the first shutoff signal R1 to the positive electrode-side contactor 75 through the signal line 181, and executes control to open the positive electrode-side contactor 75. The ECU 150 can more reliably open the positive electrode-side contactor 75 even when an abnormality occurs in the BMU 85, and can more reliably shut off the electric circuit that supplies power from the battery 50 to the motor generator 2. Further, when the BMU 85 detects an abnormality in the ECU 150, the BMU 85 independently transmits the second shutoff signal R2 to the negative electrode-side contactor 76 via the signal line 182, and executes control to open the negative electrode-side contactor 76, without depending on the control signal transmitted from the ECU 150. Therefore, even when an abnormality occurs in the ECU 150, the BMU 85 can open the negative electrode-side contactor 76 more reliably without depending on the ECU 150, so the BMU 85 can more reliably shut off the electric circuit that supplies power from the battery 50 to the motor generator 2. Thereby, the hybrid system 10 according to this embodiment can further improve the safety regarding the battery 50 that supplies power to the motor generator 2.

Further, in the hybrid system 10 according to this embodiment, when the BMU 85 detects an abnormality in the battery 50, the BMU 85 can independently open the negative electrode-side contactor 76 without depending on the control signal transmitted from the ECU 150, and can shut off the electric circuit (in this embodiment, the negative electrode wiring 175) between the negative electrode terminal 52 of the battery 50 and the motor generator 2. Since the BMU 85 can shut off the electric circuit connected to the negative electrode terminal 52 of the battery 50 at an earlier stage, it is possible to more reliably prevent problems such as short circuits from occurring in the electric circuit. Thereby, the hybrid system 10 according to this embodiment can further improve the safety regarding the battery 50 that supplies power to the motor generator 2.

Further, since the ECU 150 controls the positive electrode-side contactor 75 and the BMU 85 controls the negative electrode-side contactor 76, even when the industrial machine on which the hybrid system 10 is installed does not have a control unit, the hybrid system 10 according to this embodiment can shut off the electric circuit that supplies power from the battery 50 to the motor generator 2 using the control unit (that is, the ECU 150 and the BMU 85) in the hybrid system 10 itself. Thereby, the hybrid system 10 according to this embodiment can independently improve the safety regarding the battery 50 that supplies power to the motor generator 2 without depending on the industrial machine or the like on which the hybrid system 10 is mounted.

Further, even when a lithium-ion battery, which is relatively difficult to handle among secondary batteries, is provided as a drive power source (that is, the battery 50) for the motor generator 2, the hybrid system 10 according to this embodiment can improve the safety regarding the battery 50 that supplies power to the motor generator 2.

The embodiment of the present invention is described above. However, the present invention is not limited to the embodiment described above, and various changes can be made without departing from the scope of the claims. A part of the configuration of the embodiment described above may be omitted or may be arbitrarily combined in a manner different from that described above.

### [Reference Signs List]

- 1: Engine
- 2: Motor generator
- 10: Hybrid system
- 40: Battery pack
- 50: Battery
- 51: Positive electrode terminal
- 52: Negative electrode terminal
- 65: Current value detection unit
- 70: DC/DC converter
- 75: Positive electrode-side contactor
- 76: Negative electrode-side contactor
- 80: Battery
- 81: Positive electrode terminal
- 82: Negative electrode terminal
- 85: BMU (battery management unit)
- 100B: Ground
- 150: ECU (engine control unit)
- 171: Positive electrode wiring
- 172: Negative electrode wiring
- 173: Positive electrode wiring
- 174: Positive electrode wiring
- 175: Negative electrode wiring
- 181: Signal line
- 182: Signal line
- 193: Signal line

## Claims

1. A hybrid system comprising:
a motor generator;
a secondary battery that is provided as a drive power source for the motor generator and supplies power to the motor generator;
a positive electrode-side contactor that opens and closes an electric circuit between a positive electrode of the secondary battery and the motor generator;
a negative electrode-side contactor that opens and closes an electric circuit between a negative electrode of the secondary battery and the motor generator;
a first control unit that controls one of the positive electrode-side contactor and the negative electrode-side contactor; and
a second control unit that controls the other of the positive electrode-side contactor and the negative electrode-side contactor, based on a control signal transmitted from the first control unit.

2. The hybrid system according to claim 1, wherein
the first control unit and the second control unit communicate with each other,
the second control unit monitors a state of the secondary battery, and
when the second control unit detects an abnormality in the secondary battery, the first control unit executes control to open the one of the contactors, and the second control unit executes control to open the other of the contactors independently without depending on the control signal.

3. The hybrid system according to claim 1 or 2, wherein
the first control unit and the second control unit communicate with each other and monitor mutual states thereof,
when the first control unit detects an abnormality in the second control unit, the first control unit executes control to open the one of the contactors, and
when the second control unit detects an abnormality in the first control unit, the second control unit independently executes control to open the other of the contactors without depending on the control signal.

4. The hybrid system according to any one of claims 1 to 3, wherein
the one of the contactors is the positive electrode-side contactor, and
the other of the contactors is the negative electrode-side contactor.

5. The hybrid system according to any one of claims 1 to 4, wherein
the first control unit is an engine control unit that controls an engine, and
the second control unit is a battery management unit that is built into a battery pack and controls an operation of the battery pack.

6. The hybrid system according to any one of claims 1 to 5, wherein
the secondary battery is a lithium-ion battery.
